# EUROPÄISCHE PATENTSCHRIFT

(11) **EP 0 600 431 B1**
(45) Veröffentlichungstag und Bekanntmachung des Hinweises auf die Patenterteilung: **22.05.1996**
(21) Anmeldenummer: 93119258.7
(22) Anmeldetag: 30.11.1993
(51) Int. Cl.: B60R 11/02, B60R 25/10, B60R 25/04

(54) **Vorrichtung zum Schutz von Kraftfahrzeugen und darin befindlichen elektronischen Geräten**
Device for the protection of motor vehicles and electronic appliances found therein
Dispositif pour la protection des véhicules automobiles et des appareils électroniques se trouvant dans ces véhicules

(30) Priorität: 02.12.1992 DE 4240458
(43) Veröffentlichungstag der Anmeldung: 08.06.1994
(73) Patentinhaber: GRUNDIG E.M.V. Elektro-Mechanische Versuchsanstalt Max Grundig GmbH & Co. KG, D-90762 Fürth (DE)
(72) Erfinder: Mahmud, Shabaz, Grundig E.M.V., D-90748 Fürth (DE)

(56) Entgegenhaltungen:
- EP-A- 0 521 547
- WO-A-89/00520
- DE-A- 3 613 858
- DE-A- 4 008 536
- DE-C- 3 641 230
- GB-A- 2 219 827

## Beschreibung

Die Erfindung betrifft eine Vorrichtung zum Schutz von Kraftfahrzeugen und in Kraftfahrzeugen befindlichen elektronischen Geräten vor Diebstahl mit einem Code-Sender und einem Code-Empfänger

Zum Schutz von elektronischen Geräten, die in Kraftfahrzeugen betrieben werden, insbesondere von Autoradios, vor Diebstahl, sind seit längerer Zeit verschiedene Sicherheitssysteme bekannt, die Diebe abschrecken oder den Diebstahl erschweren sollen.
Die bekanntesten Sicherheitsvorkehrungen sind Zahlencodes, abnehmbare Bedienteile oder Halterungen, aus denen das Autoradio leicht herausgezogen werden kann, damit der Besitzer es mitnehmen kann, wenn er das Fahrzeug verläßt.
Aus der deutschen Offenlegungsschrift DE 40 08 536 A1 ist beispielsweise ein Audiogerät mit entfernbarer Betriebseinheit bekannt, bei dem die Betriebseinheit ein Speicherelement zur Speicherung eines Identifikationssignales enthält. Das Audiogerät beinhaltet ferner eine Steuereinrichtung zum Lesen des Identifikationssignales aus dem Speicherelement zum Zeitpunkt der Verbindung der Betriebseinheit mit der Haupteinheit. Der Betrieb des Audiogerätes ist nur nach Erkennung des richtigen Identifikationssignales möglich. Wenn der Eigentümer des Autoradios bei Verlassen des Fahrzeuges die Betriebseinheit mitnimmt, hinterläßt er ein unbenutzbares Autoradio, das nur mit großen Mühen wieder betriebsbereit gemacht werden kann.

Eine weitergehende Ausführung dieser Art von Diebstahlschutz ist in der PCT-Anmeldung WO 89/00520 angegeben. Dort umfasst das Autoradio ebenfalls eine separate Einrichtung zur Eingabe eines Codes und eine zugeordnete Empfangseinrichtung für diesen Code. Der Empfänger ist mit einem Komparator verbunden, dieser wiederum mit einem Speicher und dem Mikroprozessor des Autoradios. Durch die Verbindung der Codevorrichtung (Komparator und Speicher) mit dem Mikroprozessor, der in dem Fall, daß kein Codesignal erkannt wird, inaktiv geschaltet wird, wird nicht nur ein Schutz vor Diebstahl erreicht, sondern das Autoradio ist ohne den Codesender nicht mehr brauchbar.
Die Erfahrung zeigt jedoch, daß gerade bei kurzzeitiger Entfernung vom Fahrzeug die Betriebseinheit bzw. der Codesender nicht abgenommen oder entfernt wird und somit der Diebstahlschutz nicht greifen kann.

Da auch im Bereich der Autodiebstähle in den letzten Jahren deutliche Zunahmen erkennbar sind, ist es ferner von Vorteil, eine Diebstahlsicherung vorzusehen, die sowohl das Autoradio oder sonstige im Kraftfahrzeug angebrachte elektronische Geräte als auch das Auto vor Diebstahl schützen.

Eine derartige Diebstahlsicherung, die sowohl Auto als auch Autoradio vor Diebstahl schützt, ist zumindest für Automatikfahrzeuge aus der deutschen Offenlegungsschrift DE 37 43 069 A1 bekannt. Dort wird am Wählhebel bzw. seinem Sicherungsknopf ein Bohrloch angebracht. Wenn der Wählhebel in Parkstellung gebracht wird, kann der Bügel eines Vorhängeschlosses durch das Bohrloch geführt werden und der Wählhebel kann nicht aus der Parkstellung gebracht werden. Dadurch ist das Auto vor Diebstahl gesichert. Aber auch das Autoradio kann nicht ausgebaut werden, da es durch den Wählhebel blockiert ist.

Der Nachteil dieser Diebstahlsicherung wird darin gesehen, daß sie nur für Automatikfahrzeuge angewendet werden kann und die Sicherung mit dem Vorhängeschloß für den Benutzer umständlich ist, so daß zumindest bei kurzzeitigem Verlassen des Fahrzeuges damit gerechnet werden muß, daß die Diebstahlsicherung nicht angebracht wird.

Aus der deutschen Offenlegungsschrift DE-A 36 13 858 ist eine Einbruchdetektoranordnung bekannt, bei der in einem Schlüssel ein Code-Signal-Generator angeordnet ist, der ein Code-Signal erzeugt, das mittels einer Infrarotübertragung an einen Empfänger, der im Schloß angeordnet ist, übertragen wird. Bei einer vorgegebenen Rotorstellung wird für eine bestimmte Zeit das Code-Signal übertragen. Vom Empfänger wird das Code-Signal an eine Auswerteeinrichtung gegeben und bei Erkennen der richtigen Codierung wird die Alarmanlage ausgeschaltet.

Aus der britischen Offenlegungsschrift GB-A 2 219 827 ist eine Sicherheitsvorrichtung bekannt, bei der in einen Schlüssel Mittel enthalten sind, die ein Code-Signal erzeugen, das von einer Empfängervorrichtung empfangen und ausgewertet wird. Der Empfängervorrichtung ist ein Schalter zugeordnet, der bei Empfang des richtigen Code-Signal den Zugang oder Gebrauch des zu schützenden Objekts erlaubt.

Der Nachteil dieser bekannten Diebstahlschutzvorrichtungen besteht darin, daß jeweils nur ein Schutz vor unberechtigtem Zugang zu einem zu schützenden Objekt realisiert ist.

Es ist deshalb Aufgabe der Erfindung, eine Diebstahlsicherung für Kraftfahrzeuge und im Kraftfahrzeug enthaltene elektronische Geräte vorzusehen, die für den Fahrer ohne Aufwand in Betrieb gesetzt werden kann und somit bei jedem Verlassen des Fahrzeuges einen sicheren Diebstahlschutz gewährleistet.

Diese Aufgabe wird bei der gattungsgemäßen Vorrichtung durch die kennzeichnenden Merkmale des Anspruches 1 gelöst.
Vorteilhafte Weiterbildungen der Erfindung ergeben sich aus den Unteransprüchen.

Gemäß der Erfindung wird in den Zündschlüssel des Kraftfahrzeuges ein Code-Sender integriert. Dieser Code-Sender sendet in festgelegten Zeitabständen codierte Signale aus, wenn die Zündung des Kraftfahrzeuges eingeschaltet ist. In einem elektronischen Gerät, das sich im Kraftfahrzeug befindet, ist ein Code-Empfänger angebracht, der bei eingeschalteter Zündung die Codesignale auswertet und bei fehlerhaftem oder fehlendem Code ein Alarmsignal ausgibt und/oder den eigenen Betrieb einstellt.

Durch die erfindungsgemäße Vorrichtung wird gleichzeitig das elektronische Gerät im Kraftfahrzeug und das Kraftfahrzeug selbst vor Diebstahl geschützt. Im Fall, daß das elektronische Gerät aus dem Fahrzeug entwendet wird und in einem anderen Fahrzeug eingesetzt wird, wird, nachdem keine Code-Signale empfangen werden, über die Lautsprecher ein Alarm ausgegeben.

Im anderen Fall, wenn das Fahrzeug gestohlen wurde, erwartet das elektronische Gerät ebenfalls Code-Signale. Wenn diese nicht empfangen werden, weil das Fahrzeug kurzgeschlossen wurde oder mit einem nachgemachten Zündschlüssel ohne Code-Signal oder mit fehlerhaftem Code-Signal betrieben wird, wird ein Alarmsignal ausgeben.

Die Alarmsignalausgabe kann dabei auf übliche Weise über eigens dafür vorgesehene Alarmgeber oder über bereits vorhandene Signaleinrichtungen erfolgen.

Die erfindungsgemäße Vorrichtung hat weiterhin den Vorteil, daß der Fahrzeugbenutzer keine besonderen Maßnahmen treffen muß, um die Alarmanlage in Betrieb zu setzen. Auch wenn der Fahrer nur kurz sein Fahrzeug verläßt, zieht er seinen Zündschlüssel ab und nimmt ihn mit, wodurch er die Alarmanlage bereits in Betrieb gesetzt hat.
Um eine abschreckende Wirkung auf potentielle Diebe auszuüben, ist es vorteilhaft, mit einem entsprechenden Aufkleber auf das Sicherungssystem hinzuweisen.

Zur Erkennung, ob die Zündung eingeschaltet ist, kann beispielsweise im Zündschlüssel und in der Zündung ein Kontakt vorgesehen werden. Dieser Kontakt ist nur bei umgedrehtem Zündschlüssel, d.h. bei eingeschalteter Zündung geschlossen.
Im Code-Empfänger kann beispielsweise eine Schaltungsanordnung vorgesehen werden, die den Stromfluß in der Zündung überwacht und somit den eingeschalteten Zustand der Zündung erkennen kann.

Besonders vorteilhaft ist der erfindungsgemäße Code-Empfänger in einem Autoradio untergebracht. Zum ersten ist ein Autoradio in nahezu jedem Kraftfahrzeug vorhanden, zum anderen sind gerade die Diebstähle bei Autoradios sehr häufig. Im weiteren sind die Autoradiolautsprecher in besonders vorteilhafter Weise als Alarmgeber verwendbar, so daß kein Installationsaufwand für die Alarmgeber anfällt.

Mit der erfindungsgemäßen Anordnung können leicht auch mehrere im Kraftfahrzeug befindliche elektronische Geräte, wie beispielsweise Autotelefone, vor Diebstahl geschützt werden. Zu diesem Zweck wird in jedem elektronischen Gerät, das sich in einem Kraftfahrzeug befindet, ein Code-Empfänger angebracht, der auf das Code-Signal abgestimmt ist, das im Code-Sender, der im Zündschlüssel integriert ist, erzeugt wird.

Bei Fehlen des Code-Signales, das in dem im Zündschlüssel integrierten Code-Sender erzeugt wird, ist es vorteilhaft, daß funktionswesentliche Baugruppen des elektronischen Gerätes, in dem sich der Code-Empfänger befindet, abgeschaltet werden. Auf diese Weise wird dann, wenn der Diebstahl durch die Alarmgabe nicht verhindert werden konnte, zumindest das entwendete Gerät betriebsuntauglich. Durch die Anbringung einer entsprechenden Kennzeichnung über die Art dieses Diebstahlschutzes an gut sichtbarer Stelle werden potentielle Diebe abgeschreckt, da sie erkennen, daß sie ein nicht funktionstüchtiges Gerät entwenden würden.

Als vorteilhaft wird es auch angesehen, wenn der Code-Empfänger mit der Kraftfahrzeugelektronik in der Weise verbunden ist, daß auf funktionswesentliche elektronische Baugruppen des Kraftfahrzeuges zugegriffen werden kann. Auf diese Weise kann zum Beispiel mit einem Schaltsignal, das im Code-Empfänger erzeugt wird, wenn die Zündung des Kraftfahrzeuges angeschaltet ist und kein Code-Signal empfangen wird, die elektronische Einspritzanlage des Kraftfahrzeuges außer Betrieb gesetzt werden. In einem solchen Fall wird der Diebstahl des Autos verhindert.

## Patentansprüche

1. Vorrichtung zum Schutz von Kraftfahrzeugen und in den Kraftfahrzeugen befindlichen elektronischen Geräten vor Diebstahl mit einem Code-Sender und einem Code-Empfänger,
**dadurch gekennzeichnet,** daß
- der Code-Sender im Zündschlüssel des Kraftfahrzeuges integriert ist,
- der Code-Sender periodisch Signale aussendet, wenn die Zündung eingeschaltet ist,
- der Code-Empfänger in einem elektronischen Gerät im Kraftfahrzeug integriert ist,
- der Code-Empfänger bei eingeschalteter Zündung die empfangenen Code-Signale auswertet und bei fehlendem oder fehlerhaftem Code-Signal Alarm gibt.

2. Vorrichtung nach Anspruch 1,
**dadurch gekennzeichnet,** daß
im Zündschlüssel, der den Code-Sender enthält, und in der Zündung ein Kontakt vorgesehen ist, der bei eingeschalteter Zündung geschlossen ist.

3. Vorrichtung nach Anspruch 1 oder 2,
**dadurch gekennzeichnet,** daß
im Code-Empfänger eine Schaltungsanordnung vorgesehen ist, die den Stromfluß in der Zündung überwacht.

4. Vorrichtung nach einem oder mehreren der Ansprüche 1 bis 3, **dadurch gekennzeichnet,** daß
der Code-Empfänger in einem Autoradio integriert ist.

5. Vorrichtung nach einem oder mehreren der Ansprüche 1 bis 4, **dadurch gekennzeichnet,** daß
der Alarm über die Lautsprecher der Autoradioanlage ausgegeben wird.

6. Vorrichtung nach einem oder mehreren der Ansprüche 1 bis 5, **dadurch gekennzeichnet,** daß
mehrere sich in einem Fahrzeug befindliche elektronische Geräte mit je einem Code-Empfänger ausgestattet werden, der auf das Code-Signal im Zündschlüssel abgestimmt ist.

7. Vorrichtung nach einem oder mehreren der Ansprüche 1 bis 6, **dadurch gekennzeichnet,** daß
funktionswesentliche Baugruppen des elektronischen Gerätes abgeschaltet werden, wenn kein Code-Signal im Code-Empfänger empfangen werden kann.

8. Vorrichtung nach einem oder mehreren der Ansprüche 1 bis 7, **dadurch gekennzeichnet,** daß
der Code-Empfänger mit der Kraftfahrzeugelektronik verbunden ist, und im Alarmfall funktionswesentliche Elemente des Kraftfahrzeuges gesperrt werden.

## Claims

1. Device for the protection of motor vehicles and electronic appliances contained in the motor vehicles against theft, having a code transmitter and a code receiver, characterized in that
- the code transmitter is incorporated in the ignition key of the motor vehicle,
- the code transmitter periodically emits signals when the ignition is switched on,
- the code receiver is incorporated in an electronic appliance in the motor vehicle,
- when the ignition is switched on, the code receiver evaluates the code signals received and gives an alarm if the code signal is absent or incorrect.

2. Device according to Claim 1, characterized in that provided in the ignition key containing the code transmitter and in the ignition there is a contact which is closed if the ignition is switched on.

3. Device according to Claim 1 or 2, characterized in that provided in the code receiver there is a circuit arrangement which monitors the current flow in the ignition.

4. Device according to one or more of Claims 1 to 3, characterized in that the code receiver is incorporated in a car radio.

5. Device according to one or more of Claims 1 to 4, characterized in that the alarm is emitted via the loudspeakers of the car radio system.

6. Device according to one or more of Claims 1 to 5, characterized in that each of a plurality of electronic appliances contained in a vehicle is fitted with a code receiver tuned to the code signal in the ignition key.

7. Device according to one or more of Claims 1 to 6, characterized in that units in the electronic appliance essential to its operation are switched off if no code signal can be received in the code receiver.

8. Device according to one or more of Claims 1 to 7, characterized in that the code receiver is connected to the vehicle electronics and, in the event of an alarm, components of the motor vehicle essential to its operation are disabled.

## Revendications

1. Dispositif pour protéger des véhicules automobiles et des appareils électroniques situés dans des véhicules automobiles, contre le vol, comportant un émetteur de code et un récepteur de code, caractérisé en ce que
- l'émetteur de code est intégré dans la clé d'allumage du véhicule automobile,
- l'émetteur de code émet périodiquement des signaux lorsque le système d'allumage est branché,
- le récepteur de code est intégré dans un appareil électronique dans le véhicule automobile,
- le récepteur de code émet les signaux de code reçus, lorsque le système d'allumage est branché, et délivre une alarme lorsque le signal de code est absent ou défectueux.

2. Dispositif selon la revendication 1, caractérisé en ce que dans la clé de contact, qui contient l'émetteur de code, et dans le système d'allumage est prévu un contact, qui est fermé lorsque ce système d'allumage est branché.

3. Dispositif selon la revendication 1 ou 2, caractérisé en ce que dans le récepteur de code est prévu un montage, qui contrôle le flux de courant dans le système d'allumage.

4. Dispositif selon une ou plusieurs des revendications 1 à 3, caractérisé en ce que le récepteur de code est intégré dans un autoradio.

5. Dispositif selon une ou plusieurs des revendications 1 à 4, caractérisé en ce que l'alarme est délivrée par l'intermédiaire des hauts-parleurs à l'installation de l'autoradio.

6. Dispositif selon une ou plusieurs des revendications 1 à 5, caractérisé en ce que plusieurs appareils électroniques situés dans un véhicule sont équipés chacun d'un récepteur de code, qui est accordé sur le signal de code dans la clé de contact.

7. Dispositif selon une ou plusieurs des revendications 1 à 6, caractérisé en ce que des modules, qui sont importants pour le fonctionnement, de l'appareil électronique sont débranchés lorsqu'aucun signal de code ne peut être reçu dans le récepteur de code.

8. Dispositif selon une ou plusieurs des revendications 1 à 7, caractérisé en ce que le récepteur de code est relié au système électronique du véhicule automobile et dans le cas d'une alarme les éléments, essentiels pour le fonctionnement, du véhicule automobile sont bloqués.
